# EUROPEAN PATENT SPECIFICATION

(11) **EP 0 592 538 B1**
(45) Date of publication and mention of the grant of the patent: **05.03.1997**
(21) Application number: 92914582.9
(22) Date of filing: 16.06.1992
(51) Int. Cl.: G05D 11/00, F04D 15/00, F16K 15/06

(54) **RECIRCULATION VALVE**
RÜCKFÜHRVENTIL
SOUPAPE DE RECIRCULATION

(30) Priority: 01.07.1991 US 723959
(43) Date of publication of application: 20.04.1994
(73) Proprietor: KEYSTONE INTERNATIONAL HOLDINGS CORP., Houston Texas 77040 (US)
(72) Inventor: PAPTZUN, George, J., North Wales, PA 19454 (US)
(74) Representative: Kosel, Peter, Dipl.-Ing.
(86) International application number: PCT/US92/04996
(87) International publication number: WO 93/01538

(56) References cited:
- US-A- 3 180 360
- US-A- 3 409 039
- US-A- 4 095 611
- US-A- 4 243 064
- US-A- 4 941 502

## Description

### Background of the Invention

### 1. Field of the Invention

The present invention is directed to a recirculation valve for recirculating fluid back to a centrifugal pump in order to prevent damage to the pump during intervals when there is minimum demand for the pumped fluid downstream of the valve. More particularly, the present invention is directed to a recirculation valve having a two angle control surface between the check valve disc and the valve casing in order to provide a more linear relation between the position of the check valve disc and the amount of flow. The valve also allows the snap-in of different size spiral ring onto the check valve disc to change the Cv (coefficient of velocity) of the valve and the use of similar rings co change the Cv of the recirculation flow. The second angle provides clearance for the snap-on ring while maintaining linear characteristics for the both high main flow applications (no ring) and low flow applications (with ring).

### 2. Description of the Prior Art Art

Centrifugal pumps are used in a variety of applications. It is often desirable to recirculate fluid back to a centrifugal pump during intervals of low demand by an outlet device to prevent the pump from overheating. Overheating is caused by the exchange of heat between the running pump and stationary fluid present within the pump. Pump overheating lowers the vapor pressure, resulting in fluid cavitation which can destroy the pump housing and impeller.

Recirculation valves are frequently used in centrifugal pumps to control overheating. One commonly used recirculation valve is a modulating flow control valve disclosed in U.S. Pat. No. 4,095,611. The valve disclosed in U.S. Pat. No. 4,095,611 has a circular disc-shaped check valve member interposed within a two-piece valve casing. During periods of normal downstream fluid demand, a pressure differential across the valve causes it to open and permit flow while simultaneously blocking a fluid recirculation passageway. Conversely, during intervals of minimal downstream fluid demand, the disc-shaped check valve member returns to a closed position, thereby opening the fluid recirculation passageway and permitting fluid to recirculate back to the pump.

Another recirculation valve, disclosed in U.S. Pat. No. 4,243,064, has a circular main valve disc and bypass valve disc axially displaced at both ends of a connecting valve stem. During periods of normal fluid flow, the connecting valve stem moves to an open position causing fluid to flow out both the main outlet and the bypass outlet. When fluid flow is minimal, the bypass valve disc is superimposed over an annular seat which causes fluid to be redirected from the main outlet to the bypass outlet and recirculated through the centrifugal pump.

A problem encountered with the use of such recirculation valves is that the relation between the movement of the check valve means and the amount of recirculation flow does not always follow a linear relationship. Such a linear relationship allows more precise control of the amount of recirculation.

It is an object of the present invention to provide a recirculation valve having a two angle control surface between the check valve disc and the valve casing in order to provide a linear relationship between the open position of the check valve disc and the flow of fluid being recirculated. The main advantage of a dual angle is to maintain good linearity with and without the ring. It is more economical to provide a single body design. The dual angle allows the use of an inexpensive ring to change the main flow capacity and maintain good linearity.

It is a further object of the present invention to provide a recirculation valve wherein the Cv can be readily changed through the installation of different size spiral rings on the check valve disc.

It is an additional object of the present invention to provide a recirculation valve mechanism capable of being preset to allow given recirculation flow rates by presetting the position of the cylindrical bushings within the valve.

Another object is to provide multiple bypass inlet paths to provide greater bypass flow capacity for the same size bypass valve stem. A further advantage of this construction is that the upper bypass inlet ports provide another flow path through the valve stem when the valve is open providing increased main flow capacity.

These and other objects of the present invention and the various features and details thereof are hereinafter set forth in the following detailed description of the invention.

### Summary of the Invention

In accordance with the present invention a low-pressure recirculation valve for cooling a centrifugal pump is disclosed. The invention comprises a valve casing divided into inlet and outlet chambers. The casing has an inlet port for introducing fluids from a centrifugal pump into the inlet chamber and an outlet port for expelling fluids out of the casing through the outlet chamber. A check valve having a hollow valve stem separates the inlet and outlet chambers. The cylindrical hollow valve stem has a recirculation port for redirecting fluid from the hollow cylindrical valve stem to the pump. The check valve opens to permit flow from the inlet chamber to the outlet chamber and closes when no fluid flow exists. A spring biases the check valve towards a closed position. Finally, a recirculation valve formed as part of the valve stem opens the recirculation port when the check valve is closed and closes the recirculation means when the check valve is open. A two angle control surface between the check valve disc and the valve casing provides for a more linear relationship between the open position of the check valve and the flow.

### Brief Description of the Drawings

The foregoing summary, as well as the following detailed description, will be better understood when read in conjunction with the figures appended hereto. For the purpose of illustrating the invention, there is shown in the drawings an embodiment which is presently preferred, it being understood, however, that this invention is not limited to the precise arrangement and instrumentalities shown.

Fig. 1 is an elevated section view of one embodiment of a recirculation valve according to the present invention.

Fig. 2 is an enlarged sectional view of the two angle control surface, a portion of the check valve, and the seat embedded in the valve casing in the preferred embodiment, with the check valve in an open position.

Fig. 2a shows a modified form of valve seat which may be used with the present invention.

Fig. 3 is a sectional view of a modified bushing insert for the recirculation valve.

### Detailed Description of the Invention

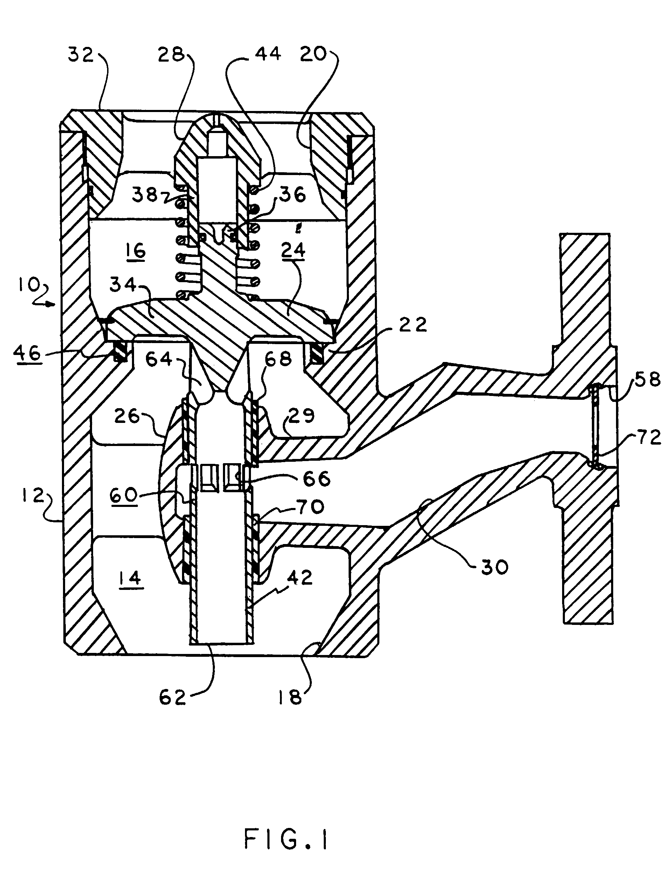

With reference to Figure 1 there is illustrated a recirculation valve 10 made in accordance with the present invention. The recirculation valve 10 comprises a valve body 12 having inlet and outlet chambers 14 and 16 communicating, respectively, with inlet port 18 and outlet port 20. The recirculation valve is preferably constructed from a corrosionresistant material such as cast iron or stainless steel. The inlet chamber 14 and outlet chamber 16 are separated by an inwardly directed annular rib 22 forming a valve seat for a check valve 24. The check valve 24 is mounted longitudinally of the valve body 12 and is guided in such movement by a lower boss 26 and an upper boss 28. The lower boss 26 is formed integrally with the valve body 12 and communicates with a valve stem guide 29 containing a recirculation passage 30, more fully described hereafter. The upper boss 28 is carried by a guide ring 32 secured to the upper end of the valve body 12 at the outlet port 20.

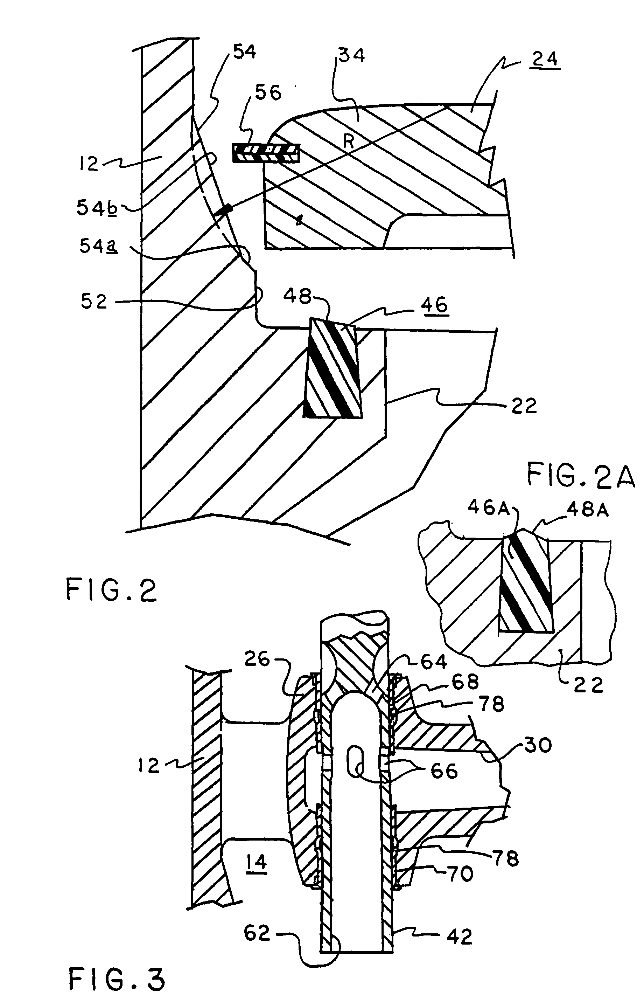

The check valve comprises a circular disc 34, a guide shaft 36 which is retained in position by an upper guide bushing 38 centered within the upper boss 28, and a hollow cylindrical valve stem 42 guided by the lower boss 26 and valve stem guide 29. The check valve 24 further incorporates a coiled biasing spring 44 between the upper guide bushing 38 and the check valve disc 34. The coil spring 44 provides spring-loaded activation of the check valve 24 between fully open and closed positions and biases the check valve 24 toward the closed position. While in the fully closed position, the check valve disc 34 rests against a valve seat insert 46 embedded in the annular rib 22 which extends from the walls of the valve body 12. This valve seat insert is used when the valve body is cast iron and may be a preformed ring of twenty-five percent glass filled teflon. The insert is not required in a stainless steel valve body. The valve seat 46 and disc 34 provide a seal when the check valve disc 34 is closed, preventing fluid flow from the outlet chamber 16 to the inlet chamber 14. The valve seat face 48 which comes in contact with the check valve disc 34 is at a two degree angle relative to the corresponding check valve disc face 50. This angle provides a uniform point of contact between the valve seat 46 and the check valve disc 34 around the entire circumference of the check valve disc 34, improving the seating of the check valve 24 when closed. The relation between the valve seat 46 and the check valve disc 34 is illustrated in Fig. 2, showing the check valve 24 in an open position. Other angles can be used depending on the resilience of the seat material. Fig. 2a illustrates another form of valve seat insert 46A and seating surface 48A which contacts the check valve disc in the closed position. In this the valve seat insert is chamfered in an inverted v shape with each chamfered surface being at preferably a three degree angle to the horizontal.

Fig. 2 shows a two angle control surface in the outlet chamber 16 defining a two section gap between the valve body 12 and the check valve 24 comprising a substantially perpendicular surface 52 abutting a second, angled surface 54. The first surface 52 defines a non-angled gap between the valve body 12 and the check valve disc 34. The non-angled gap provides for immediate lifting of the check valve from the seat upon initial flow. Thereafter, the angle of the second surface controls the lift of the disc with increased flow. This surface 54 includes a first relatively small shallow angled portion 54a and a second steeper angled portion 54b. As the downstream demand increases, correspondingly the rate of flow of fluid past the check valve increases. The angled gap, by virtue of its dual angled portions, permits a more uniform or straight line relationship of lift of the disc 34 as the flow rate increases. Alternatively, there may be a slight radius, not shown, in place of the shallow portion 54a to provide more uniform movement of the check valve disc. Another alternative is to replace both angles by a single radius R such as shown in broken lines in Fig. 2. The size of the angled gap can be preset and altered as required by installation of a circular ring 56 around the check valve disc 34. The size of the ring 56 limits the area of the gap between the valve housing and disc through which fluid can flow and thus controls the Cv of the valve 10.

The recirculation passage 30 shown in Figs. 1 and 3 leads from the inlet chamber 14 to the recirculation port 58. The valve stem 42 is hollow and includes valve stem inlet ports 62 and 64, and a plurality of outlet apertures 66. When the check valve is seated, fluid may flow through the valve stem and out of the apertures 66 into the recirculation passage 30. The valve stem guide as shown in Fig. 1 contains cylindrical upper and lower stem bushings 68 and 70 press fitted into the lower boss which engage the valve stem 42. The lower end of the upper stem bushing 68 determine the opening and closing of the apertures through which fluid exits the valve stem 42 and flows into the recirculation passage 30 relative to the position of the valve stem. The recirculation port 58 contains an orifice ring 72 which is interchangeable, the diameter of the opening provided controlling the Cv of the recirculation flow.

Figure 3 illustrates a modified form of bushing inserts 74 and 76 which are positioned within the lower boss and then distorted by pressure into annular recesses 78, 78 in the boss and locked in position.

### Operation

Fluid emerging from the centrifugal pump enters the recirculation valve 10 through inlet port 18 causing the inlet chamber 14 and valve stem 42 to fill with fluid. During intervals of low downstream demand, fluid pressure in inlet chamber 14 approaches that of outlet chamber 20, causing the check valve 24 to be retained in a closed position by the spring 44. As a result, the fluid entering the valve 10 is redirected through the stem inlet port 62 into the valve stem and then through the bypass element 60. With the check valve 24 closed, the apertures 66 in the valve stem 42 are aligned with the opening to the recirculation passage 30, thereby permitting fluid flow through the bypass 60.

Upon demand downstream of the valve 10, a pressure differential between inlet chamber 14 and outlet chamber 16 is formed wherein the inlet chamber 14 fluid pressure becomes greater than that of outlet chamber 16. When the pressure differential exceeds the preload from the spring 44, the check valve 24 moves in a longitudinal direction toward its fully open position. The longitudinal movement of the check valve 24 towards the fully open position causes the valve stem to move, raising the apertures 66 out of their aligned position with the recirculation passage 30, reducing and eventually eliminating the flow of fluid through the bypass element 60. Fluid now entering the valve stem 42 instead exits through valve stem outlet ports 63 and flows past the check valve disc 34.

The opening of the check valve 24 results in dislodging the check valve disc 34 from the valve seat 46 thereby breaking the seal between them and allowing fluid flow through outlet chamber 16 to outlet port 20. During initial flow of fluid, the check valve 24 moves to the top of the perpendicular surface 52 in the non-angled gap. As flow demand increases, the check valve 24 continues to move towards a fully open position. The rate of lift of the check valve is controlled by the angled surface 54 and the angled gap between the surface 54 and the check valve, providing a linear relationship between flow rate and the check valve disc movement.

When downstream demand reduces, fluid pressure in the outlet chamber 16 again builds up, reducing the pressure differential between it and the inlet chamber 14. When the force of the pressure differential becomes less than that of the force created by the spring 44, the spring 44 returns the check valve 24 to its fully closed position, again sealing the valve disc 34 against the valve seat 46. The valve stem apertures 66 are realigned with the recirculation passage 30, and fluid is again directed through the valve stem 42 into the bypass 60 to be recirculated back through the centrifugal pump.

## Claims

1. A recirculating valve for recirculating cooling water to a centrifugal pump comprising:
a valve casing (12) having a first chamber (14) for connection to a centrifugal pumping means, a second chamber (16) for connection to a fluid outlet, a first port (18) for introducing fluids from said centrifugal pump into said first chamber (14), a second port (20) for expelling fluids out of said casing through said second chamber (16) , and a recirculation port (30) for redirecting fluid from said first chamber (14) to said centrifugal pump;
means for changing the Cv (coefficient of velocity) within said valve;
check valve means (24) situated between said first (14) and second chamber (16), said check valve means (24) comprising a substantially circular disc (34), said check valve means (24) opening when the fluid pressure in said first chamber (14) exceeds the fluid pressure in said second chamber (16) and closing when the fluid pressure in said second chamber (16) approaches that in said first chamber (14);
means (56) for controlling the rate of flow of fluid through said recirculation port (30);
a slidable hollow valve stem (42) coupled to said check valve means (24) and extending through said chamber (14), said valve stem (42) moving responsively with said check valve means (24) between open and closed positions;
a multiple angle control surface (54a, 54b) between the circular disc (34) of said check valve and said valve casing (12) for controlling the position and lift of said check valve relative to the flow of fluid past said check valve; and
recirculation valve means (60) operatively coupled to said check valve means (24) for controlling the flow of fluid from said first chamber (14) through said recirculation port (30), said recirculation valve impeding such flow when said check valve means (24) is open and permitting such flow when said check valve means (24) is closed.

2. The recirculation valve of claim 1 further comprising means (44) for biasing said check valve means (24) toward the closed position.

3. The recirculation valve of claim 2 wherein said biasing means comprises a coil spring (44).

4. The recirculation valve of claim 1 wherein said multiple angle control surface comprises a two angle control surface (54a,54b) in said valve casing (12) in said second chamber (16).

5. The recirculation valve of claim 4 wherein said two angle control surface (54a,54b) comprises a non-angled gap (52) and an angled gap between said check valve disc and said valve casing (12) in said second chamber (16), said angled gap having a first portion (54a) forming a first angle with said non-angled gap (52) and a second portion (54b) forming a second angle with said non-angled gap (52) of steeper extent than said first angle.

6. The recirculation valve of claim 1 wherein said multiple angle control surface comprises a radius (R) in said valve casing (12) in said second chamber (16).

7. The recirculation valve of claim 6 wherein said radius (R) is situated in said valve casing (12) such that the rate of change of the gap between said check valve circular disc (34) and said valve casing (12) is greater per increment of movement of the circular disc (34) at the least open check valve position, and least per increment of circular disc (34) movement at the most open check valve position.

8. The recirculation valve of claim 1 wherein said check valve means is retained in position by a fastening means (28).

9. The recirculation valve of claim 1 wherein said check valve circular disc (34) rests against a seat (48) embedded in said valve casing (12) when in the closed position, said seat (48) containing means for improved seating.

10. The recirculation valve of claim 9 wherein said improved seating means comprises a face of said seat (48) which contacts said check valve circular disc (34) being at a two degree angle relative to a corresponding face of said check valve circular disc (34).

11. The recirculation valve of claim 1 wherein said means for changing the Cv of the fluid whithin said recirculation valve comprises an interchangeable spiral ring (56) embedded in said check valve circular disc (34).

12. The recirculation valve of claim 11 wherein said spiral ring (56) controls the width of said angled gap.

13. The recirculation valve of claim 1 wherein said means for controlling the rate of flow of fluid directed through said recirculation port (30) comprises cylindrical bushings (68,70) situated between said valve casing (12) and said valve stem (42).

14. The recirculation valve of claim 13 wherein said means for controlling the rate of flow of fluid further comprises variable positioning of said cylindrical bushing (68,70) controlling the location or size of a gap between said bushings.

15. The recirculation valve of claim 1 wherein the means (56) for controlling the rate of flow of fluid directed through said recirculation port (30) further comprises an adjustable orifice plate (72) mounted at said recirculation port (30).

16. The recirculation valve of claim 1 wherein said valve stem (42) includes a plurality of apertures (66) which permit fluid to flow from said first chamber (14) through said recirculation port (30).

17. The recirculation valve of claim 15 wherein said structural means for controlling the position and lift of said check valve comprises a two angle control surface, being a non-angled gap (52) and an angled gap (54) between said check valve circular disc (34) and said valve casing (12).

18. The recirculation valve of claim 17 wherein said means for changing the Cv of the fluid within said recirculation valve comprises an interchangeable spiral ring (56) embedded in said check valve circular disc (34), permitting changes in the width of said angled gap.

19. The recirculation valve of claim 18 wherein said check valve circular disc (34) rests against a seat (46) embedded in said valve casing (12) when in the closed position, said seat (46) providing improved seating means, said seating means comprising a face (48) of said seat (46), said face (48) contacting said check valve circular disc (34), being at a two degree angle relative to a corresponding face of said check valve circular disc (34).

20. The recirculation valve of claim 1 wherein said valve stem (42) includes a plurality of slots which align with said apertures to create a passageway for fluid when said check valve menas (24) is closed.

21. The recirculation valve of claim 1 wherein said multiple angle control surface comprises at least two angled control surfaces (54a,54b) wherein the angle of each successive control surface relative to the disc increases such that the rate of change of the gap between said check valve circular disc (34) and said valve casing (12) is greater per increment of circular disc (34) movement at the least open check valve position, and lesser per increment of circular disc (34) movement at the most open check valve position.

## Patentansprüche

1. Rückführventil zur Rückführung von Kühlwasser zu einer Kreiselpumpe, bestehend aus:
einem Ventilgehäuse (12) mit einer ersten, zur Verbindung mit einer Kreiselpumpe bestimmten Kammer (14), einer zweiten, zur Verbindung mit einem Fluidauslaß bestimmten Kammer (16), einer ersten Öffnung (18) zum Einführen von Fluiden aus der Kreiselpumpe heraus in die genannte erste Kammer (14) hinein, einer zweiten Öffnung (20) zum Ausstoßen von Fluiden aus dem Gehäuse durch die genannte zweite Kammer (16) hindurch und eine Rückführöffnung (30) zur Rückleitung von Fluid aus der ersten Kammer (14) in die genannte Kreiselpumpe;
Mittel zur Veränderung des Cᵥ (Geschwindigkeitskoeffizient) innerhalb des genannten eines Ventils;
einem Prüfventil (24), das zwischen der ersten (14) und zweiten Kammer (16) angeordnet ist, wobei das genannte Prüfventil (24) aus einer im wesentlichen kreisförmigen Scheibe (34) besteht, wobei das Prüfventil (24) öffnet, sobald der Fluiddruck in der genannten ersten Kammer (14) den Fluiddruck in der genannten zweiten Kammer (16) übersteigt und wobei das genannte Prüfventil (24) schließt, sobald der Fluiddruck in der genannten zweiten Kammer (16) sich demjenigen der genannten ersten Kammer (14) annähert;
Mittel (56) zur Regelung des Fluiddurchflusses durch die genannte Rückführöffnung (30);
einem gleitfähigen, hohl ausgebildeten Ventilschaft (42), der an das genannte Prüfventil (24) angekuppelt ist und sich durch die genannte Kammer (14) hindurcherstreckt, wobei der genannte Ventilschaft (42) sich in Abhängigkeit von dem genannten Prüfventil (24) zwischen einer Öffnungs- und einer Schließstellung bewegt;
einer vielwinkligen Steuerfläche (54a, 54b) zwischen der kreisförmigen Scheibe (34) des genannten Prüfventils und dem genannten Ventilgehäuse (12) zur Steuerung der Position und des Hubes des genannten Prüfventils in Abhängigkeit von dem Fluß des Fluids durch das Prüfventil; und
einem Rückführventilteil (60), welches mit dem genannten Prüfventil (24) betrieblich gekuppelt ist, um den Fluß des Fluids aus der genannten ersten Kammer (14) über die Rückführöffnung (30) zu regeln, wobei das genannte Rückführventil einen solchen Fluß verhindert, wenn das Prüfventil (24) geöffnet ist und einen solchen Fluß erlaubt, wenn das Prüfventil (24) geschlossen ist.

2. Rückführventil nach Anspruch 1, welches ferner Mittel (44) zur Erzeugung einer Vorspannung des Prüfventils (24) gegenüber seiner Schließposition umfaßt.

3. Rückführventil nach Anspruch 2, wobei die genannten Vorspannmittel aus einer Schraubenfeder (44) bestehen.

4. Rückführventil nach Anspruch 1, wobei die genannte vielwinklige Steuerfläche aus einer, zwei Winkel aufweisenden Steuerfläche (54a, 54b) innerhalb des genannten Ventilgehäuses (12) in der zweiten Kammer (16) besteht.

5. Rückführventil nach Anspruch 4, wobei die genannte, zwei Winkel aufweisende Steuerfläche (54a, 54b) einen, keinen Winkel aufweisenden Spalt (52) und einen winkligen Spalt zwischen der genannten Prüfventilscheibe und dem genannten Ventilgehäuse (12) in der zweiten Kammer (16) aufweist, wobei der genannte winklige Spalt einen ersten Abschnitt (54a) hat, der mit dem genannten, keinen Winkel aufweisenden Spalt (52) einen ersten Winkel bildet und wobei ein zweiter Abschnitt (54b) mit dem keinen Winkel aufweisenden Spalt (52) einen zweiten Winkel bildet, der steiler als der erste Winkel verläuft.

6. Rückführventil nach Anspruch 1, wobei der, vielwinklige Steuerabschnitt einen Radius (R) in dem genannten Ventilgehäuse (12) in der genannten zweiten Kammer (16) aufweist.

7. Rückführventil nach Anspruch 6, wobei sich der genannte Radius (R) in dem genannten Ventilgehäuse (12) derart erstreckt, daß die Änderungsrate des Spaltes zwischen der genannten kreisförmigen Prüfventilscheibe (34) und dem genannten Ventilgehäuse (12) bei der geringsten Öffnungsposition des Prüfventils pro Bewegungsschritt größer und bei der größten Öffnungsposition des Prüfventils pro Bewegungsschritt der kreisförmigen Schiebe (34) am geringsten ist.

8. Rückführventil nach Anspruch 1, wobei das Prüfventil mittels eines Befestigungsmittels (28) in seiner Position gehalten ist.

9. Rückführventil nach Anspruch 1, wobei die kreisförmige Prüfventilscheibe (34) in der Schließposition an einem Sitz (48) anliegt, der in das genannte Ventilgehäuse (12) eingebettet ist, wobei der Sitz (48) Mittel zur Sitzverbesserung aufweist.

10. Rückführventil nach Anspruch 9, wobei das Mittel zur Bereitstellung eines verbesserten Sitzes eine solche Seite des genannten Sitzes (48) aufweist, welche in Berührung mit der kreisförmigen Ventilscheibe (34) steht und einen Winkel von ungefähr zwei Grad relativ zu einer entsprechenden Seite der genannten kreisförmigen Prüfventilscheibe (34) bildet.

11. Rückführventil nach Anspruch 1, wobei das genannte Mittel zur Veränderung des C_{V} des Fluids innerhalb des genannten Rückführventils einen austauschbaren Spiralring (56) aufweist, der in die genannte kreisförmige Prüfventilscheibe (34) eingebettet ist.

12. Rückführventil nach Anspruch 11, wobei der genannte Spiralring (56) die Breite des winkligen Spaltes steuert.

13. Rückführventil nach Anspruch 1, wobei das genannte Mittel zur Steuerung des durch die Rückführöffnung (30) geführten Fluids zylindrische Buchsen (68, 70) aufweist, die sich zwischen dem genannten Ventilgehäuse (12) und dem genannten Ventilschaft (42) befinden.

14. Rückführventil nach Anspruch 13, wobei das genannte Mittel zur Steuerung des Durchflusses des Fluids weiterhin ein veränderbares Positionieren der zylindrischen Buchsen (68, 70) umfaßt, über welche der Ort oder die Größe eines Spaltes zwischen den Buchsen gesteuert wird.

15. Rückführventil nach Anspruch 1, wobei die Mittel (56) zur Steuerung des Flusses des über die Rückführöffnung (30) geführten Fluids ferner eine justierbare Blendenplatte (72) umfassen, die in der Rückführöffnung (30) angeordnet ist.

16. Rückführventil nach Anspruch 1, wobei der genannte Ventilschaft (42) eine Vielzahl von Öffnungen (66) aufweist, welche den Fluß eines Fluids von der ersten Kammer (14) durch die genannte Rückführöffnung (30) ermöglichen.

17. Rückführventil nach Anspruch 15, wobei die genannten strukturellen Mittel zur Steuerung der Position und des Hubes des genannten Prüfventils eine, durch zwei Winkel gebildete Steuerfläche umfassen, welche keinen Winkel aufweisenden Spalt (52) und einen winkligen Spalt (54) zwischen der genannten kreisförmigen Prüfventilscheibe (34) und dem genannten Ventilgehäuse (12) bildet.

18. Rückführventil nach Anspruch 17, wobei das genannte Mittel zur Veränderung des C_{V} des Fluids innerhalb des Rückführventils einen austauschbaren Spiralring (56) aufweist, der in die genannte kreisförmige Prüfventilscheibe (34) eingebettet ist und Veränderungen der Breite des genannten winkligen Spaltes ermöglicht.

19. Rückführventil nach Anspruch 18, wobei die genannte kreisförmige Prüfventilscheibe (34) in der Schließposition auf einen Sitz (46) aufliegt, der in das genannte Ventilgehäuse (12) eingebettet ist, wobei der genannte Sitz (46) verbesserte Sitzmittel aufweist, wobei die genannten Sitzmittel eine Seite (48) des genannten Sitzes (46) umfassen, welche mit der genannten kreisförmigen Prüfventilscheibe (34) in Berührung steht und sich unter einem Winkel von zwei Grad im Verhältnis zu einer entsprechenden Seite der genannten kreisförmigen Prüfventilscheibe (34) erstreckt.

20. Rückführventil nach Anspruch 1, wobei der genannte Ventilschaft (42) eine Vielzahl von Schlitzen aufweist, die mit den genannten Öffnungen ausgerichtet sind, um einen Durchgang für das Fluid bereitzustellen, wenn das Prüfventil (24) geschlossen ist.

21. Rückführventil nach Anspruch 1, wobei die genannte, vielwinklige Steuerfläche wenigstens zwei winklige Steuerflächen (54a, 54b) aufweist, wobei der Winkel einer jeden der aufeinanderfolgenden Steuerflächen relativ zu der Scheibe zunimmt, und zwar derart, daß die Änderungsrate des Spaltes zwischen der genannten kreisförmigen Prüfventilscheibe (34) und dem genannten Ventilgehäuse (12) bei der geringsten Öffnungsposition des Prüfventils pro Schritt der kreisförmigen Scheibe (34) größer ist und bei der größten Öffnungsposition des Prüfventils pro Schritt der kreisförmigen Scheibe (34) kleiner ist.

## Revendications

1. Soupape de recirculation servant à renvoyer l'eau de refroidissement à une pompe centrifuge comprenant :
un boîtier (12) de soupape renfermant une première chambre (14) destinée à être raccordée à des moyens de pompage centrifuge, une deuxième chambre (16) destinée à être raccordée à une sortie de fluide, un premier orifice (18) destiné à introduire des fluides issus de ladite pompe centrifuge dans ladite première chambre (14), un deuxième orifice (20) destiné à expulser des fluides dudit boîtier à travers ladite deuxième chambre (16), et un orifice de recirculation (30) destiné à renvoyer le fluide de ladite première chambre (14) à ladite pompe centrifuge ;
des moyens permettant de modifier le Cv (coefficient de vitesse) à l'intérieur de ladite soupape ;
des moyens (24) formant clapet anti-retour situés entre ladite première chambre (14) et ladite deuxième chambre (16), lesdits moyens (24) formant clapet anti-retour comprenant un disque sensiblement circulaire (34), lesdits moyens (24) formant clapet anti-retour s'ouvrant lorsque la pression de fluide dans ladite première chambre (14) est supérieure à la pression de fluide régnant dans ladite deuxième chambre (16) et se fermant lorsque la pression de fluide régnant dans ladite deuxième chambre (16) s'approche de celle régnant dans ladite première chambre (14) ;
des moyens ( 5 6 ) servant à commander le débit d'écoulement du fluide à travers ledit orifice de recirculation (30) ;
une tige de soupape creuse coulissante (42) accouplée auxdits moyens (24) formant clapet anti-retour et qui s'étend dans ladite chambre (14), ladite tige de soupape (42) se déplaçant conjointement avec lesdits moyens (24) formant clapet anti-retour entre une position ouverte et une position fermée ;
une surface de commande à pentes multiples (54a, 54b) entre le disque circulaire (34) dudit clapet anti-retour et ledit boîtier (12) de la soupape pour commander la position et la levée dudit clapet anti-retour en fonction de l'écoulement du fluide au droit dudit clapet anti-retour ; et
des moyens (60) formant soupape de recirculation, couplés fonctionnellement auxdits moyens (24) formant clapet anti-retour pour commander ledit écoulement du fluide provenant de ladite première chambre (14) à travers ledit orifice de recirculation (30), ladite soupape de recirculation interdisant cet écoulement lorsque lesdits moyens (24) formant clapet anti-retour sont ouverts et autorisant cet écoulement lorsque lesdits moyens (24) formant clapet anti-retour sont fermés.

2. Soupape de recirculation selon la revendication 1, comprenant en outre des moyens ( 4 4 ) servant à solliciterlesdits moyens (24) formant clapet anti-retour vers leur position fermée.

3. Soupape de recirculation selon la revendication 2, dans laquelle lesdits moyens de sollicitation comprennent un ressort hélicoïdal (44).

4. Soupape de recirculation selon la revendication 1, dans laquelle ladite surface de commande à pentes multiples comprend une surface de commande (54a, 54b) à deux pentes formée dans ledit boîtier (12) de la soupape, à l'intérieur de ladite deuxième chambre (16).

5. Soupape de recirculation selon la revendication 4, dans laquelle ladite surface de commande à deux pentes (54a, 54b) donne naissance à une fente (52) à pente nulle et à une fente à pente entre ledit disque de clapet anti-retour et ledit boîtier (12) de la soupape à l'intérieur de ladite deuxième chambre (16), ladite fente à pente ayant une première portion (54a) qui forme un premier angle avec ladite fente à pente nulle (52) et une deuxième portion (54b) qui forme un deuxième angle avec ladite fente à pente nulle (52) et qui est plus raide que ledit premier angle.

6. Soupape de recirculation selon la revendication 1, dans laquelle ladite surface de commande à pentes multiples a un rayon (R) pratiqué dans ledit boîtier (12) de la soupape, à l'intérieur de ladite deuxième chambre (16).

7. Soupape de recirculation selon la revendication 6, dans laquelle ledit rayon (R) est situé dans le boîtier (12) de la soupape, de telle manière que la variation de la fente entre ledit disque circulaire (34) du clapet anti-retour et ledit boîtier (12) de la soupape soit plus large, par incrément de mouvement du disque circulaire (34), dans la position la moins ouverte du clapet anti-retour et à son minimum, par incrément du mouvement du disque circulaire (34), dans la position la plus ouverte du clapet anti-retour.

8. Soupape de recirculation selon la revendication 1, dans laquelle lesdits moyens formant clapet anti-retour sont retenus en position par des moyens de fixation (28).

9. Soupape de recirculation selon la revendication 1, dans laquelle ledit disque circulaire (34) de clapet anti-retour repose sur un siège (48) encastré dans ledit boîtier (12) de la soupape lorsqu'il est dans la position fermée, ledit siège (48) contenant des moyens servant à améliorer la portée.

10. Soupape de recirculation selon la revendication 9, dans laquelle lesdits moyens formant une portée améliorée comprennent une face dudit siège (48) qui entre en contact avec ledit disque circulaire (34) du clapet anti-retour et qui est inclinée d'un angle de deux degrés par rapport à une face correspondante dudit disque circulaire (34) du clapet anti-retour.

11. Soupape de recirculation selon la revendication 1, dans laquelle lesdits moyens permettant de modifier le Cv du fluide à l'intérieur de la soupape de recirculation comprennent une bague spirale interchangeable (56) encastrée dans ledit disque circulaire (34) du clapet anti-retour.

12. Soupape de recirculation selon la revendication 11, dans laquelle ladite bague spirale (56) commande la largeur de ladite fente à pente.

13. Soupape de recirculation selon la revendication 1, dans laquelle lesdits moyens servant à commander le débit d'écoulement du fluide qui est envoyé à travers ledit orifice de recirculation (30) comprennent des bagues cylindriques (68, 70) situées entre ledit boîtier (12) de la soupape et ladite tige de soupape (42).

14. Soupape de recirculation selon la revendication 13, dans laquelle lesdits moyens servant à commander le débit d'écoulement du fluide comprennent en outre le positionnement variable de ladite bague cylindrique (68, 70) qui détermine la position ou la dimension d'un espace situé entre lesdites bagues.

15. Soupape de recirculation selon la revendication 1, dans laquelle les moyens (56) servant à commander le débit d'écoulement du fluide envoyé à travers ledit orifice de recirculation (30) comprennent en outre une plaque à orifice (72) réglable, montée au droit dudit orifice de recirculation (30).

16. Soupape de recirculation selon la revendication 1, dans laquelle ladite tige de soupape (42) présente une pluralité d'ouvertures (66) qui permettent au fluide de s'écouler de ladite première chambre (14) à travers ledit orifice de recirculation (30).

17. Soupape de recirculation selon la revendication 15, dans laquelle lesdits moyens structuraux destinés à commander la position et la levée du clapet anti-retour comprennent une surface de commande à deux pentes, qui est constituée par une fente à pente nulle (52) et une fente à pente (54) prévues entre ledit disque circulaire (34) du clapet anti-retour et ledit boîtier (12) de la soupape.

18. Soupape de recirculation selon la revendication 17, dans laquelle lesdits moyens permettant de modifier le Cv du fluide à l'intérieur de ladite soupape de recirculation comprennent une bague spirale interchangeable (56) encastrée dans ledit disque circulaire (34) du clapet anti-retour, qui permet de faire varier la largeur de ladite fente à pente.

19. Soupape de recirculation selon la revendication 18, dans laquelle ledit disque circulaire (34) du clapet anti-retour repose sur un siège (46) encastré dans ledit boîtier (12) de la soupape lorsqu'il est dans la position fermée, ledit siège (46) constituant des moyens de portée perfectionnés, lesdits moyens de portée comprenant une face (48) dudit siège (46), ladite face (48) entrant en contact avec ledit disque circulaire (34) du clapet anti-retour, qui est incliné d'un angle de deux degrés par rapport à une face correspondante dudit disque circulaire (34) du clapet anti-retour.

20. Soupape de recirculation selon la revendication 1, dans laquelle ladite tige de soupape (42) comprend une pluralité de fentes qui sont alignées entre lesdites ouvertures pour créer un passage pour le fluide lorsque ledit moyen (24) formant clapet anti-retour est fermé.

21. Soupape de recirculation selon la revendication 1, dans laquelle ladite surface de commande à pentes multiples comprend au moins deux surfaces de commande à pente (54a, 54b), où la pente de chacune des surfaces de commande successives par rapport au disque croît de telle manière que la variation de la fente entre ledit disque circulaire (34) du clapet anti-retour et ledit boîtier (12) de la soupape soit plus grande, par incrément du mouvement du disque circulaire (34), dans la position la moins ouverte du clapet anti-retour et qu'elle soit plus petite, par incrément du mouvement du disque circulaire (34), dans la position ouverte au maximum du clapet anti-retour.
